# FASCICULE DE BREVET EUROPEEN

(11) **EP 0 577 856 B1**
(45) Date de publication et mention de la délivrance du brevet: **08.05.1996**
(21) Numéro de dépôt: 92109043.7
(22) Date de dépôt: 29.05.1992
(51) Int. Cl.: B26D 7/08, B26D 3/18, B26D 9/00

(54) **Procédé et dispositif de découpe d'abats congelés**
Verfahren und Vorrichtung zum Schneiden von gefrorenen Eingeweiden
Method and apparatus for cutting frozen pluck

(43) Date de publication de la demande: 12.01.1994
(73) Titulaire: SOCIETE DES PRODUITS NESTLE S.A., CH-1800 Vevey (CH)
(72) Inventeur: Guyot, Dominique, F-80090 Amiens (FR); Thevenot, Rémi, F-60500 Chantilly (FR)

(56) Documents cités:
- EP-A- 0 399 269
- EP-A- 0 450 692
- FR-A- 2 280 030
- FR-A- 2 287 970
- FR-A- 2 367 582
- US-A- 3 401 728
- US-A- 3 989 196
- US-A- 4 441 003
- US-A- 4 488 027

## Description

L'invention concerne un procédé de découpe d'abats congelés sous forme de cubes ainsi que le dispositif pour la mise en oeuvre de ce procédé.

On sait déjà faire des découpes sous forme de cubes à partir de pains congelés d'abats. On opère dans ce cas en faisant des tranches et en passant lesdites tranches à travers un système permettant la découpe sous forme de cubes. L'inconvénient d'une telle solution est qu'elle ne permet pas d'une part d'obtenir des cubes réguliers et d'autre part on arrive à une quantité de fines qui n'est pas acceptable compte tenu des contraintes industrielles (voir par exemple EP-A-450692).

Par fines, on entend de petites particules (1 mm à quelques mm), issues de matières premières mises en oeuvre et générées par le seul fait des différentes découpes.

Le but de la présente invention est de proposer un procédé de découpe d'abats congelés donnant des cubes réguliers avec un minimum de fines et avec un débit correspondant aux exigences industrielles de productivité.

On a constaté, selon l'invention, que pour faire de telles découpes sous forme de cubes, il était indispensable de tempérer les pains congelés d'abats et de les amener à une température supérieure à -10°C.

L'invention concerne donc un procédé de découpe d'abats congelés sous forme de cubes, dans lequel on découpe sous forme de tranches d'épaisseur comprise entre 6 et 15 cm les pains congelés d'abats se situant à une température de l'ordre de -20°C, on tempère lesdites tranches par passage dans un tunnel micro-ondes pour qu'elles arrivent à une température de sortie de l'ordre -5 à -9°C, on réduit ladite tranche sous forme de copeaux et on réduit lesdits copeaux sous forme de cubes.

Un procédé et un dispositif à tunnel micro-ondes avec bande transporteuse sont certes connus du document EP-A-399269, mais dans un autre but que celui de la présente demande, pour la précuisson de fonde de pizza cru.

On a constaté que pour obéir aux contraintes de productivité, c'était le tempérage par micro-ondes qui était le mieux adapté dans le présent procédé de cubage. Ceci est également vrai pour des raisons d'encombrement de ligne. En effet, avec les micro-ondes on arrive à mettre au point une ligne qui ne dépasse pas les 20 m de long.

Avant de faire la découpe sous forme de cube on réduit les tranches sous forme de copeaux. Cette réduction est faite pour permettre d'arriver dans le dispositif de cubage avec des morceaux de taille plus petite. Par copeaux, on entend des morceaux de la largeur d'une main ayant une épaisseur d'environ 1 à 3 cm.

La découpe en tranches avant le passage dans le tunnel micro-ondes est effectué pour diminuer les gradients de température dans la masse. On a constaté qu'une épaisseur de tranches allant jusqu'à 15 cm, permet d'obtenir des températures à coeur et sur la surface desdites tranches les plus proches possibles. C'est surtout l'épaisseur des tranches, leur forme et leur température initiale qui sont critiques.

Par abats dans la présente description, on entend aussi bien des lobes de poumons, que des foies ou des rognons de tout type d'animal destiné à l'abattage. Par congélation, on entend des produits étant à une température comprise entre -24 et -10°C. Les pains congelés ont normalement des tailles de moins d'un mètre et d'épaisseur de l'ordre de 20 cm. L'élément clé du procédé selon l'invention est l'étape de tempérage dans le four tunnel micro-ondes. On a constaté que les morceaux devaient sortir à une température entre -5 et -9°C pour arriver au cubage à une température comprise entre -3 et -6°C. On a en effet remarqué que si le cubage est fait à cette température on minimise vraiment les risques de production de fines.

De manière à avoir un encombrement raisonnable de cette ligne de production, on calcule la vitesse de passage dans le tunnel micro-ondes de l'ordre de 1 à 2 mètre/minute permettant d'arriver à un débit de 500 à 5000 kg/h, dépendant du type d'abats traités.

On produit normalement des cubes ayant un volume compris entre 1 et 8 cm³. Ces cubes sont destinés à être incorporés dans des terrines ou tout autre produit pour alimentation animale à raison de 30 à 60%, lesdites terrines étant finalement stérilisées.

On peut également inverser les étapes du procédé et commencer par réduire les abats congelés sous forme de copeaux, puis tempérer lesdits copeaux par passage dans le tunnel micro-ondes et finalement réduire sous forme de cubes. Dans ce cas, on supprime une étape. A la sortie du tunnel, les copeaux sont à une température de l'ordre de -4 à -6°C.

L'invention concerne également un dispositif pour la mise en oeuvre du procédé décrit précédemment conformément à la revendication 5.

Dans le cas où on supprime l'étape de tranchage, le dispositif selon l'invention comprend un système de découpe sous la forme de copeaux, un four tunnel micro-ondes et un système de découpe sous forme de cubes, une bande transporteuse reliant toujours les différents éléments entre eux.

La suite de la description est faite en référence aux dessins sur lesquels
**Fig 1**
   est une représentation schématique du dispositif selon l'invention,
**Fig 2**
   est une représentation schématique du système pour faire des tranches,
**Fig 3**
   est une représentation schématique du système de découpe sous la forme de copeaux et
**Fig 4**
   est une représentation schématique du système de découpe sous forme de cubes.

Le pain congelé (1) arrive sur le système de tranchage (2) comportant un couteau P₃. La tranche (3) tombe sur une bande transporteuse (4) à taquets comportant des rouleaux d'entraînement (5, 6). La tranche (3) est amenée dans le tunnel micro-ondes (7) par la bande transporteuse (8) comportant des rouleaux d'entraînement (9, 10). Le tunnel comprend un applicateur micro-ondes (11). A la sortie du tunnel, la tranche est reprise sur une bande transporteuse (12) à taquets avec rouleaux d'entraînement (13, 14). Elle retombe sur le plan de travail du système (15) de réduction en copeaux (16). Ce système comprend un tambour (17) muni de couteaux (18). Les copeaux sont alors repris sur une bande transporteuse à taquets (19) comportant des rouleaux d'entraînement (20, 21). Ces copeaux tombent alors dans la trémie (22) d'alimentation du système de cubage (23) duquel sort le produit final sous forme-de cubes (24), lesdits cubes étant ainsi prêts pour leur utilisation par exemple dans des terrines ou pâtés.

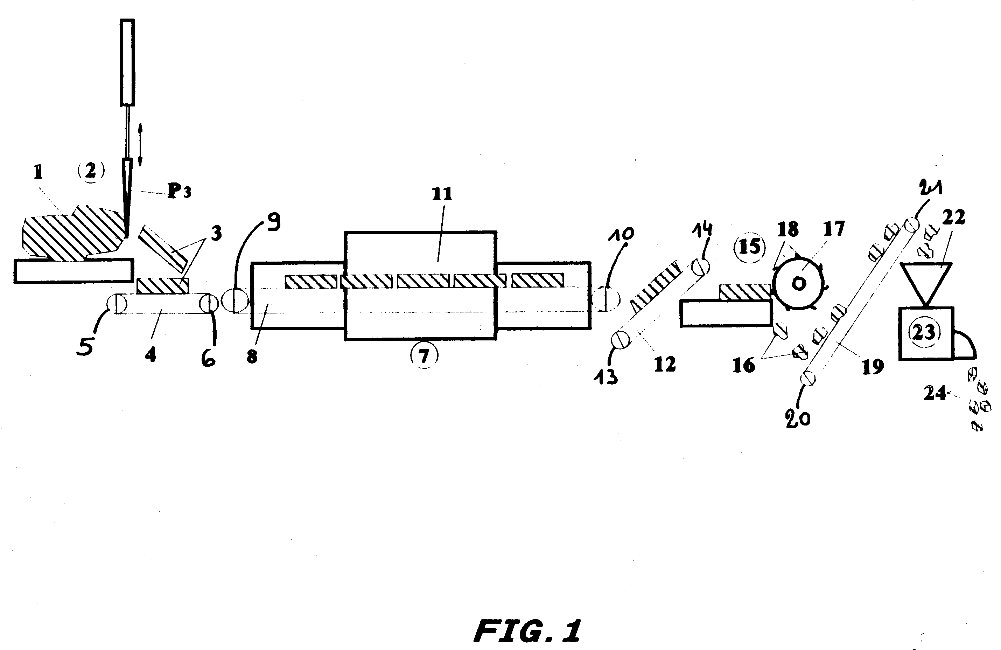

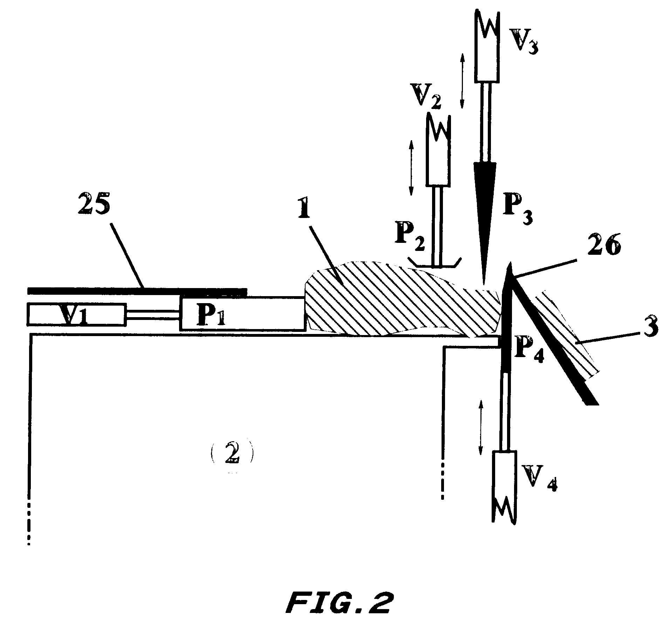

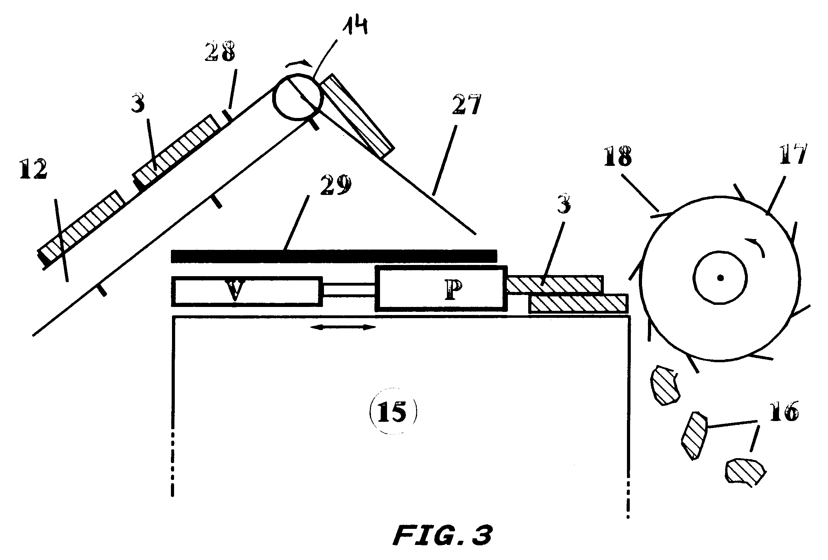

En référence à la Fig 2, le système de tranchage comporte quatre vérins V₁, V₂, V₃, V₄ et leur pistons associés P₁, P₂, P₃, P₄. Sous le carter de protection (25), lorsque le pain d'alimentation (1) est tombé dans le magasin d'alimentation le vérin V₁ pousse le piston de poussée (P₁) contre le pain de viande (1), qui lui-même est retenu contre la grille de maintien avant (P₄) du pain. Le vérin V₂ pousse ensuite la plaque de maintien (P₂) du pain à plat. Le couteau P₃ poussé par V₃ tranche alors le pain de viande, P₄ se rétracte, permettant ainsi à la tranche (3) de tomber sur la pente d'évacuation (26) et sur la bande transporteuse (4) pour aller vers le tunnel micro-ondes (7). Ensuite P₄ remonte, de même que P₃ et P₂ permettant ainsi à P₁ de pousser le pain 1 d'une distance égale à l'épaisseur de la tranche précédente. En référence à la Fig 3, le système de découpe (15) sous forme de copeaux est alimenté par la bande transporteuse (12) comportant des taquets (28). Les tranches (3) tombent sur la pente d'arrivée (27) dans le magasin d'alimentation. Sous le carter de protection (29) se trouve un vérin V et le piston P qui lui est associé. Pour le tambour (17) on peut sélectionner sa vitesse de rotation. Celui-ci comporte sur sa périphérie des couteaux trancheurs (18) qui viennent grignoter les tranches de viande (3) tempérées entre -5 et -9°C par le micro-ondes.

Ces couteaux sont positionnés de façon à couvrir toute la largeur du tambour. Le tambour pourra donc être alimenté sur toute sa largeur. Le tambour (17) tournant dans le sens de la flèche, le vérin V actionne le piston P qui pousse les tranches contre le tambour en rotation.

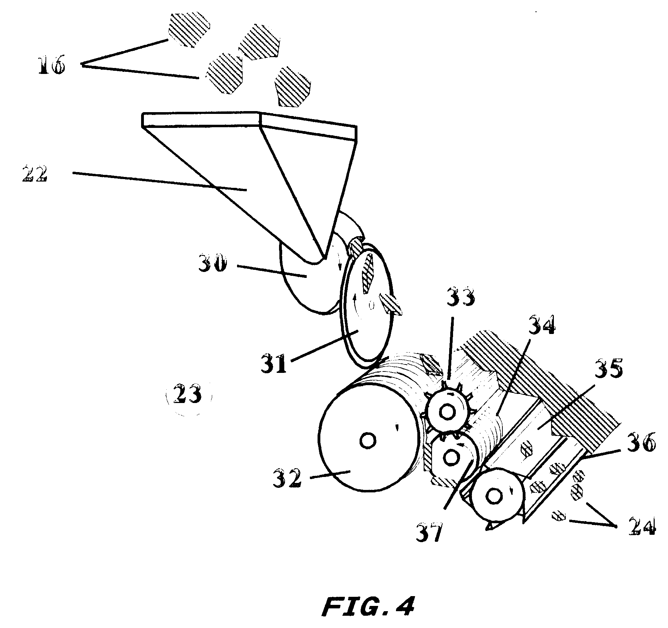

Le tambour ronge les tranches par attaque des couteaux (18) sur celles-ci, de manière à obtenir les copeaux (16). Lorsque le piston P a atteint sa course maximum, il revient en arrière pour permettre une alimentation du magasin. Les copeaux (16) sont alors repris par la bande transporteuse (19) qui les amène jusqu'à la trémie d'alimentation (22) du système de cubage (23) (Fig 4). Ces copeaux (16) de quelques cm d'épaisseur, larges comme la main, sont acheminés de la trémie (22) de la cubeuse (23) jusqu'à la turbine d'alimentation (30) de ladite cubeuse. Centrifugés, les copeaux forcent le passage dans l'ouverture prévue à cet effet en étant coupés par le couteau trancheur circulaire (31) de grande dimension. Les lamelles ainsi fabriquées tombent sur un tambour d'alimentaiton (32) cannelé et rotatif qui les propulse contre le rouleau d'alimentation (33) et qui les entraîne sur l'arbre (34) équipé de couteaux circulaires rotatifs parallèles (37). Les lamelles sont tranchées longitudinalement en lanières. Ces dernières sont alors saisies par l'arbre (35) qui tourne en sens inverse de l'arbre (34) et les découpe en petits cubes (24) expulsés de la cubeuse.

La suite de la description est faite en référence à un exemple de réalisation pratique. On dispose de pains de foie congelés ayant un poids de 30 kg et arrivant à une température de -17°C. On utilise une trancheuse de la Société Magurit permettant de faire des tranches de 60 mm d'épaisseur. On fait passer ces tranches dans un tunnel de 5 m de long porteur d'une bande transporteuse avançant à 1,1 m/min. Le tunnel Mo comporte 48 générateurs fournissant une puissance de 19,2 KW. Les tranches sortent à une température de -8°C et sont amenées sur une système de réduction en copeaux de la Société Magurit (appareil dénommé Starcutter). Les copeaux arrivent ensuite à un dispositif de cubage de la Société Urschel permettant de délivrer des cubes de 2-3 cm³ à un débit de 1350 kg/h.

## Revendications

1. Procédé de découpe d'abats congelés sous forme de cubes caractérisé en ce qu'on découpe sous forme de tranches d'épaisseur comprise entre 6 et 15 cm des pains congelés d'abats se situant à une température de l'ordre de -20°C, on tempère lesdites tranches par passage dans un tunnel micro-ondes pour qu'elles arrivent à une température de sortie de l'ordre de -5 à -9°C, on réduit ladite tranche sous forme de copeaux et on réduit lesdits copeaux sous forme de cubes.

2. Procédé selon la revendication 1, caractérisé en ce que le passage dans le tunnel micro-ondes se fait à une vitesse d'ordre de 1 à 2 mètre/minute.

3. Procédé selon l'une des revendications 1 ou 2, caractérisé en ce qu'on obtient des cubes ayant un volume de l'ordre de 1 à 8 cm³.

4. Procédé selon l'une quelconque des revendications 1 à 3 caractérisé en ce qu'on produit des morceaux sous forme de cubes à un débit de 500 à 5000 kg/h.

5. Dispositif pour la mise en oeuvre du procédé selon l'une quelconque des revendications 1 à 4, avec un système (2) pour faire des tranches, caractérisé en ce qu'il comprend
- un four tunnel micro-ondes (11) travaillant à une fréquence de 2450 Mhz et une puissance de 60 KW et ayant une longueur comprise entre 3 et 10 m,
- un système (15) de découpe sous la forme de copeaux et
- un système de découpe (23) sous forme de cube, un système de bandes transporteuses (4,12,19) reliant les différents éléments entre-eux, la bande transporteuse (12) de transport des tranches comportant des taquets (28).

## Claims

1. Method for cutting frozen offal in the form of cubes, characterised in that frozen blocks of offal at a temperature of around -20°C are cut in the form of slabs with a thickness of between 6 and 15 cm, the said slabs are tempered by passing through a microwave tunnel so that they arrive at a discharge temperature of around -5 to -9°C, the said slab is reduced in the form of slices and the said slices are reduced in the form of cubes.

2. Method according to Claim 1, characterised in that the passage through the microwave tunnel takes place at a speed of around 1 to 2 metres/minute.

3. Method according to one of Claims 1 or 2, characterised in that cubes having a volume of around 1 to 8 cm³ are obtained.

4. Method according to any one of Claims 1 to 3, characterised in that pieces in the form of cubes are produced at a rate of 500 to 5000 kg/hr.

5. Device for implementing the method according to any one of Claims 1 to 4, with a system (2) for producing slabs, characterised in that it comprises
- a microwave tunnel oven (11), operating at a frequency of 2450 MHz and a power of 60 kW and with a length of between 3 and 10 m,
- a system (15) for cutting in the form of slices, and
- a system (23) for cutting in the form of cubes, a conveyor belt system (4, 12, 19) connecting the different elements together, the conveyor belt (12) for transporting the slabs having dogs (28).

## Patentansprüche

1. Verfahren zum Schneiden von gefrorenen Eingeweiden zu Würfeln, dadurch gekennzeichnet, daß man gefrorene Eingeweidelaibe mit einer Temperatur von etwa -20°C zu Scheiben mit einer Dicke von 6 bis 15 cm schneidet, diese Scheiben durch Durchgang durch einen Mikrowellentunnel temperiert, so daß sie zu einer Ausgangstemperatur von etwa -5 bis -9°C gelangen, diese Scheibe zu Spänen zerkleinert und diese Späne zu Würfeln zerkleinert.

2. Verfahren nach Anspruch 1, dadurch gekennzeichnet, daß der Durchgang durch den Mikrowellentunnel mit einer Geschwindigkeit von etwa 1 bis 2 m/min vor sich geht.

3. Verfahren nach einem der Ansprüche 1 oder 2, dadurch gekennzeichnet, daß man Würfel mit einem Volumen von etwa 1 bis 8 cm³ erhält.

4. Verfahren nach einem der Ansprüche 1 bis 3, dadurch gekennzeichnet, daß man würfelförmige Stücke mit einem Durchsatz von 500 bis 5000 kg/h erzeugt.

5. Vorrichtung zur Durchführung des Verfahrens nach einem der Ansprüche 1 bis 4 mit einem System (2) zum Herstellen von Scheiben, dadurch gekennzeichnet, daß sie
- einen Mikrowellentunnelofen (11), der mit einer Frequenz von 2450 MHz und einer Leistung von 60 KW arbeitet und eine Länge von 3 bis 10 m hat,
- ein System (15) zum Schneiden zu Spänen und
- ein System (23) zum Schneiden zu Würfeln besitzt, wobei ein System von Förderbändern (4, 12, 19) die verschiedenen Elemente miteinander verbindet und das Förderband (12) zur Beförderung der Scheiben Mitnehmer (28) aufweist.
